# FASCICULE DE BREVET EUROPEEN

(11) **EP 0 715 383 B1**
(45) Date de publication et mention de la délivrance du brevet: **13.01.1999**
(21) Numéro de dépôt: 95410132.5
(22) Date de dépôt: 23.11.1995
(51) Int. Cl.: H02B 1/052

(54) **Dispositif de verrouillage d'un appareil électrique sur un rail de support**
Anordnung zur Befestigung eines elektrischen Gerätes an einer Tragschiene
Device for locking an electric apparatus on a mounting rail

(30) Priorité: 02.12.1994 FR 9414737
(43) Date de publication de la demande: 05.06.1996
(73) Titulaire: SCHNEIDER ELECTRIC SA, 92100 Boulogne Billancourt (FR)
(72) Inventeur: Vanzetto, Daniel, Schneider Electric, F-38050 Grenoble Cedex 09 (FR)
(74) Mandataire: Hecké, Gérard

(56) Documents cités:
- EP-A- 0 342 070
- EP-A- 0 615 326
- DE-A- 3 922 551

## Description

La présente invention concerne un dispositif de verrouillage d'un appareil électrique pour bloquer ce dernier sur un rail de support ayant au moins un rebord saillant contre lequel s'applique une face arrière de l'appareil, le dispositif comportant un verrou, mobile par coulissement le long de ladite face arrière et sollicité par la force d'un ressort en direction d'une position de verrouillage dans laquelle le verrou est engagé derrière ledit rebord, et des moyens de commande agencés pour être actionnés manuellement pour déplacer le verrou dans le sens opposé à la force du ressort, dans une position déverrouillée.

Il est bien connu de fixer des appareils électriques tels que de petits disjoncteurs contre un panneau vertical qui constitue le fond d'une armoire métallique, ce panneau étant pourvu de rails de support normalisés, disposés horizontalement et présentant deux rebords saillants opposés. La face arrière de chaque appareil présente généralement un profil en crochet, agencé pour s'accrocher au rebord supérieur du rail pour supporter l'appareil, et au moins un verrou inférieur coulissant verticalement pour s'accrocher au rebord inférieur du rail sous l'action d'un ressort de rappel. Le verrou peut présenter un biseau sur le côté arrière de son extrémité pour que, lorsqu'on met en place l'appareil, le verrou puisse être repoussé par le rebord comme un pêne de porte et s'encliqueter derrière ce rebord. Le verrou est prolongé vers le bas pour présenter une tête de commande qui émerge légèrement de la face inférieure de l'appareil de façon que l'utilisateur puisse tirer le verrou vers le bas, par exemple au moyen de la pointe d'un tournevis, pour le déverrouiller et pour permettre d'enlever l'appareil du rail. Le ressort est conçu pour remettre automatiquement le verrou dans sa position de verrouillage.

Ce mode de commande du verrou présente certains inconvénients. La tête de commande, située sous l'appareil et près du panneau supportant celui-ci, est peu accessible et en outre peu visible parce que sa taille est réduite afin de limiter l'encombrement de l'appareil. En outre, elle est souvent masquée par des connexions placées sur la face inférieure de l'appareil. Cet inconvénient existe notamment dans le cas où un appareil auxiliaire juxtaposé est associé à un disjoncteur et monté à côté de lui sur le même rail. L'appareil auxiliaire comporte des connexions qui se placent au-dessous du disjoncteur et rendent l'accès à la tête de commande du verrou difficile, voire impossible. Par ailleurs, avec ce genre de verrou à encliquetage automatique, un contrôle visuel du verrouillage n'est pas possible, puisque la tête de commande a pratiquement la même position avant et après que le verrou soit engagé derrière le rebord du rail.

Le document DE-A-3922551 décrit un dispositif de verrouillage d'un appareil électrique sur un rail profilé à bords saillants. Le dispositif comprend un verrou coulissant le long de la face arrière de l'appareil, et actionnable au moyen d'un levier double disposé sous la cage mobile de la borne de raccordement électrique. L'un des bras du levier est solidarisé au verrou, et l'autre bras est soumis à la force d'un ressort qui sollicite le verrou vers la position verrouillée lorsque la cage se trouve dans une position relevée, notamment lors du serrage du conducteur contre la plage. La manoeuvre du verrou vers la position déverrouillée résulte du déplacement préalable de la cage vers une position abaissée. Le fond de la cage provoque le pivotement du levier à l'encontre de la force de rappel du ressort. Cette manoeuvre s'effectue au moyen d'un tournevis introduit par un orifice du boîtier de l'appareil, et utilisant la tête de vis de la borne comme moyen de commande. L'action sur le verrou n'est pas directe, car elle est dérivée du déplacement en translation de la cage, et du mouvement de pivotement du levier intermédiaire. Plusieurs tours de vis sont nécessaires pour déplacer le verrou vers la position déverrouillée, ce qui provoque obligatoirement la déconnexion du conducteur. Pour fixer l'appareil sur le rail, il est indispensable de dévisser d'abord la vis de plusieurs tours pour séparer le fond de la cage de l'extrémité supérieure du bras. La tête de vis intégrée à l'intérieur du boîtier, reste cachée et ne permet pas de repérer directement la position de verrou depuis l'extérieur, notamment en cas d'adjonction d'un cache-bornes après connexion des conducteurs.

Le document EP-A-0615326 se rapporte à une boîte de dérivation, fixée sur un rail au moyen d'un verrou actionné par une came. Le verrou est agencé sur le fond de la boîte, et sa position est rendutinvisible depuis l'extérieur lorsque la boîte est fermée par un couvercle d'obturation.

La présente invention a pour objet un dispositif de verrouillage susceptible d'être manoeuvré facilement en toutes circonstances. Un but additionnel consiste à agencer le dispositif de manière à permettre un contrôle visuel de la position de verrouillage.

Le dispositif de verrouillage selon l'invention est caractérisé en ce que :
- les moyens de commande comportent une tige rotative s'étendant à travers l'appareil, ladite tige ayant une tête de commande visible et accessible en permanence sur une face avant de l'appareil et une extrémité arrière pourvue d'une came agencée pour actionner ledit verrou en vue de l'amener dans ladite position déverrouillée en agissant contre ladite force du ressort,
- la tige rotative comprend un fût central cylindrique logé dans un alésage ayant un axe de rotation disposé perpendiculairement à la direction de coulissement du verrou,
- la came possède un profil conformé pour définir deux positions stables du verrou, correspondant respectivement à ladite position de verrouillage et à ladite position déverrouillée,
- la tête de commande est pourvue d'un index, notamment un doigt latéral coopérant avec au moins un repère fixe sur la face avant de l'appareil.

Le fait que la tête de commande se trouve sur la face avant de l'appareil garantit non seulement qu'elle soit toujours accessible, mais permet aussi de repérer directement la position de la tige rotative et donc du verrou. La tige rotative traversant l'appareil constitue un organe de commande très simple et peu encombrant. Comme la came entraînée par cette tige agit à l'encontre du ressort de rappel, elle peut être agencée pour maintenir le verrou dans une position stable déverrouillée, ce qui facilite le démontage, notamment si plusieurs verrous doivent être maintenus déverrouillés en même temps.

De préférence, la came a un profil qui définit deux positions stables du verrou, correspondant respectivement à la position de verrouillage et à la position déverrouillée. En particulier, ce profil peut comporter une portion de surface plate, définissant la position de verrouillage. La force du ressort pressant le verrou contre cette surface plate empêche toute rotation intempestive de la tige rotative. Par ailleurs, le profil de la came peut comporter une portion de surface cylindrique, centrée sur l'axe de rotation et définissant la position déverrouillée. Cette position du verrou est stable grâce à la forme cylindrique de ladite portion de surface et à la friction produite sur cette surface par la force du ressort. La manoeuvre du dispositif reste toutefois aisée puisque seule cette friction doit être vaincue.

D'autres avantages de la présente invention sont exposés dans la description d'une forme de réalisation préférée, donnée ci-dessous à titre d'exemple non limitatif en référence aux dessins annexés, dans lesquels :
la figure 1 est une vue en perspective d'un appareil électrique monté sur un rail de support et bloqué sur ce rail au moyen d'un dispositif de verrouillage selon l'invention,
la figure 2 est une vue schématique en coupe verticale d'une partie de l'appareil et montre le dispositif dans une position stable de verrouillage,
la figure 3 est une vue de détail suivant la flèche III de la figure 2,
la figure 4 est une vue analogue à la figure 2 et montre le dispositif de verrouillage dans une position stable déverrouillée, et
la figure 5 est une vue de détail suivant la flèche V de la figure 4.

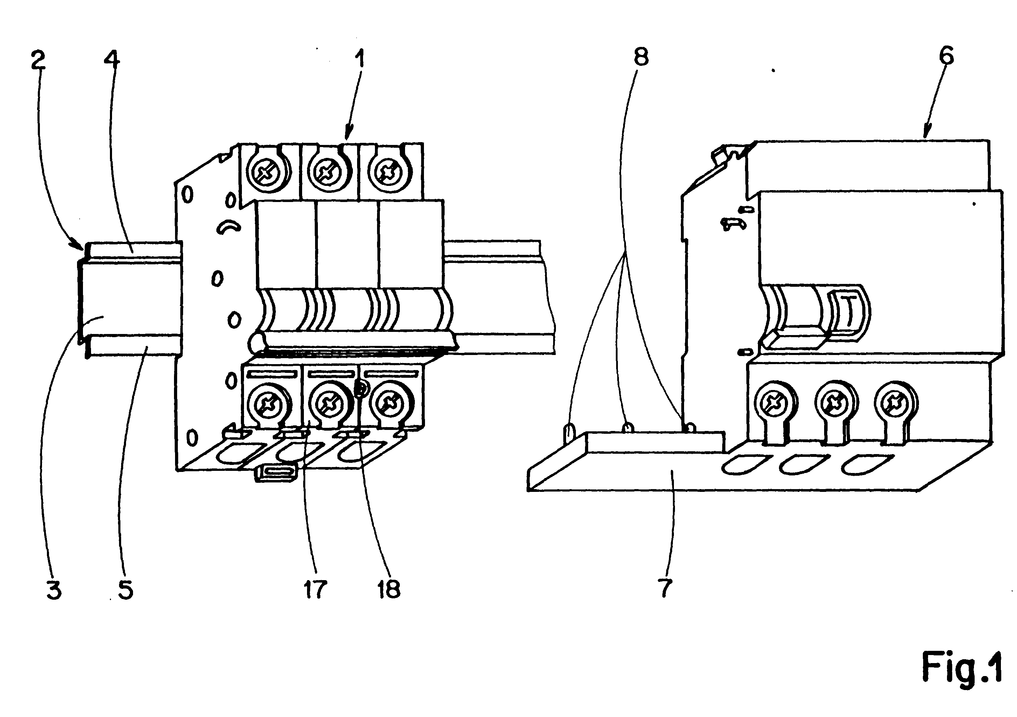

En référence à la figure 1, l'appareil électrique représenté est un disjoncteur tripolaire 1 monté sur un rail métallique de support 2 d'un type connu normalisé, appelé communément "rail DIN". Ce type de rail a un profil général en U, dont le dos 3 est destiné à être fixé à un panneau arrière d'un boîtier ou d'une armoire, ou à un mur et dont les ailes comportent un rebord supérieur 4 et un rebord inférieur 5 qui sont parallèles au dos 3. Le rail 2 peut supporter plusieurs appareils électriques, tels que le disjoncteur 1, qui sont accrochés derrière le rebord supérieur 4 et verrouillés derrière le rebord inférieur 5 au moyen du dispositif de verrouillage qui sera décrit ci-dessous. Un bloc de protection différentielle 6 destiné à être monté sur le rail 2 est associé au disjoncteur 1, auquel il sera connecté électriquement au moyen d'un bloc de connexion 7 s'appliquant sous le disjoncteur 1, la connexion étant assurée par trois broches verticales 8. Comme mentionné précédemment, les moyens de commande d'un dispositif de verrouillage selon l'art antérieur, sur le disjoncteur 1, sont généralement cachés et rendus inaccessibles lors de la mise en place du bloc de connexion 7.

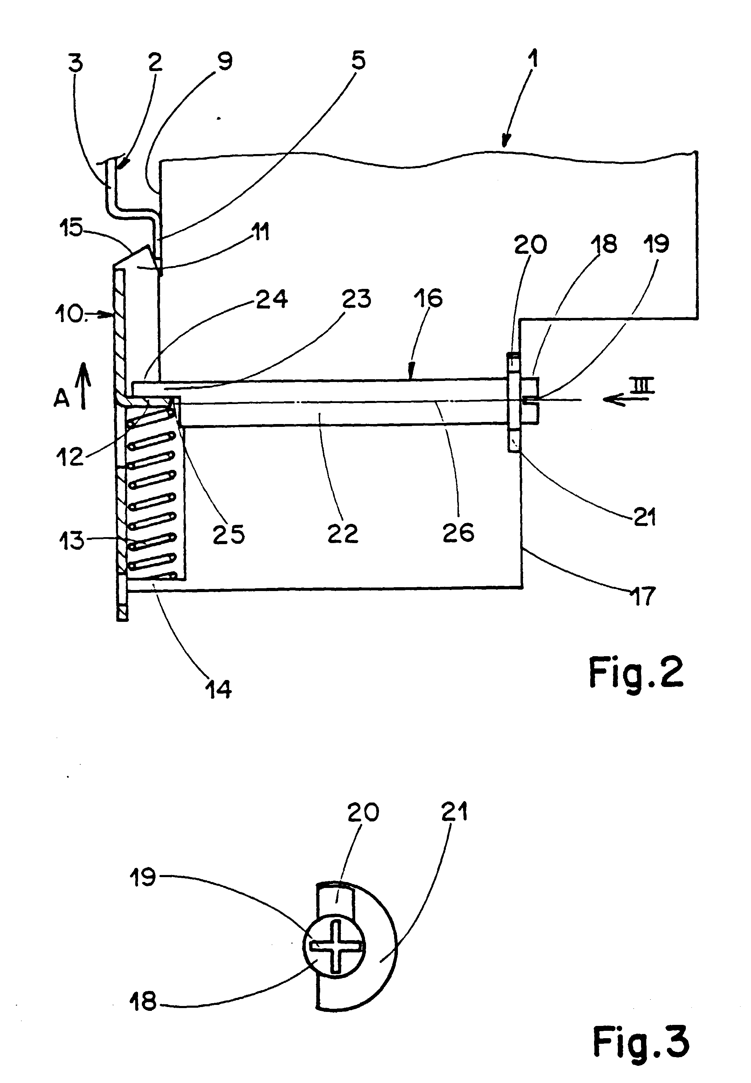

Le dispositif de verrouillage disposé dans la partie inférieure du disjoncteur 1 est représenté par les figures 2 à 5. Il comporte un verrou 10 disposé sur la face arrière 9 du disjoncteur 1 et agencé pour coulisser verticalement dans le sens de la flèche A pour que son extrémité supérieure 11 s'engage derrière le rebord inférieur 5 du rail de support 2, empêchant ainsi le disjoncteur 1 de se déplacer vers l'avant ou vers le haut. Le verrou 10 peut aussi s'engager, le cas échéant, dans des encoches (non représentées) ménagées dans le rebord 5 pour assurer un verrouillage longitudinal. Dans l'exemple représenté, le verrou 10 est une pièce en tôle pliée dont un élément 12 est plié à angle droit pour se trouver dans un plan perpendiculaire à la direction de coulissement A. Cet élément 12 est poussé en permanence dans le sens de la flèche A par la force d'un ressort de rappel 13 travaillant en compression prenant appui sur une partie fixe 14 du disjoncteur 1. Le ressort de rappel 13 tend à repousser constamment le verrou 10 vers sa position de verrouillage illustrée à la figure 2. C'est le cas notamment lorsqu'on met en place le disjoncteur 1 sans reculer le verrou 10, lequel est alors repoussé vers le bas par le rebord 5 s'appuyant contre un biseau extérieur 15 de l'extrémité 11 du verrou.

Une tige rotative 16 qui s'étend horizontalement à travers le disjoncteur 1 et présente, sur la face avant 17 de celui-ci, une tête de commande 18 visible et accessible en permanence permet de commander manuellement la position du verrou 10. La tête 18 est agencée comme une tête de vis et comporte par exemple une fente cruciforme 19 dans laquelle on peut engager un tournevis pour faire tourner la tige 16. Comme le montre la figure 3, la tête 18 comporte en outre un doigt latéral 20 pouvant se déplacer sur un angle de 180° dans une rainure en arc de cercle 21 dont les extrémités servent de butées de fin de course pour arrêter le doigt 20.

La tige rotative 16 a un fût central cylindrique 22 logé dans un alésage correspondant du bloc 1. L'extrémité arrière de la tige 16 est façonnée pour former une came 23 contre laquelle l'élément 12 du verrou 10 est appliqué par la force du ressort 13. Dans l'exemple représenté, la came 23 est réalisée par enlèvement latéral de matière à partir de la section circulaire du fût cylindrique 22. La matière est enlevée sur plus de la moitié du diamètre de la section, de sorte que la came 23 présente d'un côté une portion de surface cylindrique 24 s'étendant sur moins de 180°, et de l'autre côté une portion de surface plate 25 située du même côté de l'axe de rotation 26 de la tige que la portion de surface cylindrique 24. Bien entendu, les angles entre les deux portions de surface 24 et 25 de la came peuvent être arrondis.

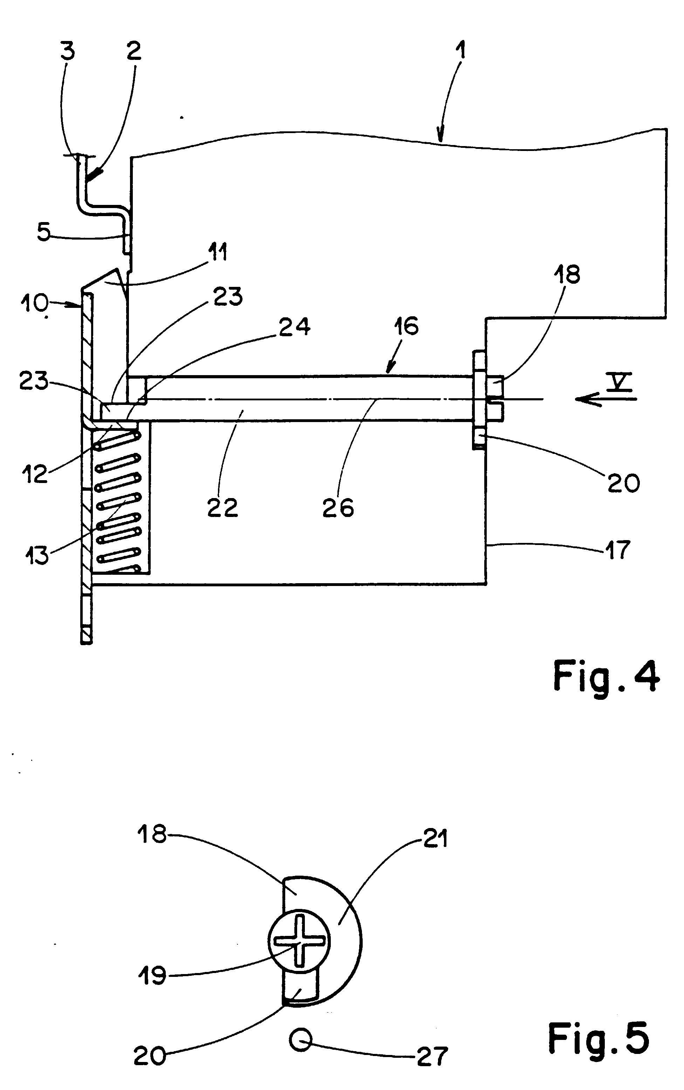

Dans la position de verrouillage illustrée par les figures 2 et 3, l'élément 12 du verrou peut s'appuyer contre la portion de surface plate 25, à moins que le verrou ne soit retenu plus en arrière par le rebord 5. Pour mettre le verrou 10 dans sa position déverrouillée illustrée par les figures 4 et 5, on fait pivoter d'environ 180° la tige rotative 16 au moyen d'un tournevis, ce qui amène le doigt 20 en regard d'un repère 27 tel qu'un point rouge, identifiant cette position. Pendant ce mouvement, la came 23 repousse le verrou 10 vers le bas à l'encontre de la force du ressort de rappel 13, si bien que l'extrémité 11 du verrou se dégage du rebord 5 et permet de tirer en avant le disjoncteur 1. Cette position du verrou est stable parce que l'élément 12 du verrou est pressé contre la portion de surface cylindrique 24 de la tige 16, donc il ne tend pas à faire tourner cette tige, mais plutôt à la maintenir dans cette position par friction. Pour remettre le verrou 10 dans sa position de verrouillage, il suffit de faire tourner la tige 16 de 180° dans le sens contraire.

Le dispositif de verrouillage décrit ci-dessus présente de notables avantages par rapport à l'art antérieur. La tête de commande 18 du verrou est accessible quel que soit l'état des équipements auxiliaires associés à l'appareil équipé du verrou, par exemple la présence du bloc de protection différentielle 6 décrit en référence à la figure 1. Le même verrou pourra être utilisé sur des appareils différents, de hauteur plus ou moins grande au-dessous du rail de support 2, puisque le verrou n'émerge pas de la face inférieure de l'appareil. Il en résulte une rationalisation de la construction des appareils. La commande du verrou au moyen de la tige rotative 16 et de sa came 23 permet une commande bistable, puisqu'elle définit deux positions stables du verrou, respectivement de verrouillage et de déverrouillage. Cela facilite les manoeuvres d'installation ou de dépose des appareils, notamment lorsque plusieurs verrous sont nécessaires pour fixer un même appareil. En effet, l'installateur peut manoeuvrer les verrous l'un après l'autre sans les tenir déverrouillés pendant qu'il place l'appareil, comme il devait le faire avec les verrous de l'art antérieur. Néanmoins, une mise en place par encliquetage du verrou reste possible. Par ailleurs, la tête de commande 18 étant toujours visible, son doigt latéral 20 permet de vérifier en tout temps que le dispositif n'a pas été laissé en position déverrouillée.

## Revendications

1. Dispositif de verrouillage d'un appareil électrique (1) pour bloquer ce dernier sur un rail de support (2) ayant au moins un rebord saillant (5) contre lequel s'applique une face arrière (9) de l'appareil, le dispositif comportant un verrou (10) mobile par coulissement le long de ladite face arrière et sollicité par la force d'un ressort (13) en direction d'une position de verrouillage dans laquelle le verrou est engagé derrière ledit rebord, et des moyens de commande agencés pour être actionnés manuellement pour déplacer le verrou dans le sens opposé à la force du ressort, dans une position déverrouillée,
caractérisé en ce que:
- les moyens de commande comportent une tige rotative (16) s'étendant à travers l'appareil, ladite tige ayant une tête de commande (18) visible et accessible en permanence sur une face avant (17) de l'appareil (1) et une extrémité arrière pourvue d'une came (23) agencée pour actionner ledit verrou en vue de l'amener dans ladite position déverrouillée en agissant contre ladite force du ressort,
- la tige rotative (16) comprend un fût central cylindrique logé dans un alésage ayant un axe de rotation (26) disposé perpendiculairement à la direction de coulissement du verrou,
- la came (23) possède un profil conformé pour définir deux positions stables du verrou, correspondant respectivement à ladite position de verrouillage et à ladite position déverrouillée,
- la tête de commande (18) est pourvue d'un index, notamment un doigt latéral (20) coopérant avec au moins un repère fixe (27) sur la face avant de l'appareil..

2. Dispositif de verrouillage selon la revendication 1, caractérisé en ce que le profil de la came (23) comporte une portion de surface plate (25) définissant ladite position de verrouillage.

3. Dispositif de verrouillage selon la revendication 2, caractérisé en ce que le profil de la came (23) comporte une portion de surface cylindrique (24), centrée sur ledit axe de rotation (26) et définissant la position déverrouillée.

4. Dispositif de verrouillage selon la revendication 3, caractérisé en ce que la portion de surface plate (25) est décalée par rapport à l'axe de rotation (26) en direction de la portion de surface cylindrique (24).

5. Dispositif de verrouillage selon la revendication 3, caractérisé en ce que la tige rotative (16) a une section transversale cylindrique entre sa tête de commande (18) et la came (23) et en ce que la portion de surface plate (25) de la came est réalisée par enlèvement de matière par rapport à ladite section cylindrique.

6. Dispositif de verrouillage selon la revendication 1, caractérisé en ce que ladite tête de commande (18) présente sensiblement la forme d'une tête de vis.

7. Dispositif de verrouillage selon la 1, caractérisé en ce que ledit doigt latéral (20) est mobile dans une rainure en arc de cercle (21) dont les extrémités correspondent aux deux positions stables du verrou (10).

## Patentansprüche

1. Verriegelungsvorrichtung für ein elektrisches Schaltgeräts (1) zu dessen Fixierung auf einer Tragschiene (2) mit mindestens einer hervorragende Schulter (5), auf die eine Rückseite (9) des Schaltgeräts aufgesetzt wird, wobei die Vorrichtung einen beweglichen Riegel (10), der längs der genannten Rückseite verschoben werden kann und durch die Kraft einer Feder (13) in Richtung einer Verriegelungsstellung beaufschlagt wird, in der der Riegel hinter die genannte Schulter greift, sowie Betätigungsmittel umfaßt, die dazu ausgelegt sind, von Hand bedient zu werden, um den Riegel entgegen der Kraftrichtung der Feder in eine Entriegelungsstellung zu überführen,
dadurch gekennzeichnet, daß
- die Betätigungsmittel eine das Gehäuse durchragende Drehstange (16) umfassen, wobei die genannte Stange einen sichtbaren und an einer Vorderseite (17) des Schaltgeräts (1) dauerhaft zugänglichen Betätigungskopf (18) sowie ein hinteres Ende mit einer Steuerkurve (23) aufweist, die dazu ausgelegt ist, den genannten Riegel zu betätigen, um ihn entgegen der genannten Kraft der Feder in die genannte Entriegelungsstellung zu überführen,
- die Drehstange (16) einen zylindrischen Mittelschaft aufweist, der in einer Ausnehmung angeordnet ist und dessen Drehachse (26) senkrecht zur Verschiebungsrichtung des Riegels verläuft,
- die Steuerkurve (23) eine Kontur aufweist, die so geformt ist, daß sie zwei stabile Stellungen des Riegels jeweils entsprechend der genannten Verriegelungsstellung und der genannten Entriegelungsstellung definiert,
- der Betätigungskopf (18) einen insbesondere als seitlich herausstehende Nase (20) ausgebildeten Zeiger umfaßt, der mit mindestens einer an der Vorderseite des Schaltgeräts fest angebrachten Markierung (27) zusammenwirkt.

2. Verriegelungsvorrichtung nach Anspruch 1, dadurch gekennzeichnet, daß die Kontur der Steuerkurve (23) einen ebenen Oberflächenabschnitt (25) umfaßt, der die genannte Verriegelungsstellung definiert.

3. Verriegelungsvorrichtung nach Anspruch 2, dadurch gekennzeichnet, daß die Kontur der Steuerkurve (23) einen zylindrischen Oberflächenabschnitt (24) umfaßt, der die genannte Entriegelungsstellung definiert.

4. Verriegelungsvorrichtung nach Anspruch 3, dadurch gekennzeichnet, daß der ebene Oberflächenabschnitt (25) bezüglich der Drehachse (26) in Richtung des zylindrischen Oberflächenabschnitt (24) versetzt angeordnet ist.

5. Verriegelungsvorrichtung nach Anspruch 3, dadurch gekennzeichnet, daß die Drehstange (16) zwischen ihrem Betätigungskopf(18) und der Steuerkurve (23) einen zylindrischen Querschnitt aufweist und daß der ebene Oberflächenabschnitt (25) der Steuerkurve durch Materialausnehmung aus dem genannten zylindrischen Querschnitt gebildet ist.

6. Verriegelungsvorrichtung nach Anspruch 1, dadurch gekennzeichnet, daß der genannte Betätigungskopf (18) annähernd die Form eines Schraubenkopfes aufweist.

7. Verriegelungsvorrichtung nach Anspruch 1, dadurch gekennzeichnet, daß die genannte seitlich hervorstehende Nase (20) in einer kreisbogenförmigen Nut (21) verschoben werden kann, deren Enden den beiden stabilen Stellungen des Riegels (10) entsprechen.

## Claims

1. A locking device of an electrical apparatus (1) to secure the latter on a support rail (2) having at least one protruding edge (5) against which a rear face (9) of the apparatus is applied, the device comprising a locking bolt (10) movable by sliding along said rear face and urged by the force of a spring (13) in the direction of a locking position in which the locking bolt is engaged behind said edge, and operating means arranged to be actuated manually to move the locking bolt in the opposite direction to the force of the spring to an unlocking position,
characterized in that:
- the operating means comprise a rotating rod (16) extending through the apparatus, said rod having a permanently visible and accessible operating head (18) on a front face (17) of the apparatus (1) and a rear end provided with a cam (23) arranged to actuate said locking bolt for the purposes of moving it to said unlocking position by acting against said force of the spring,
- the rotating rod (16) comprises a cylindrical central body housed in a drilled bore having an axis of rotation (26) arranged perpendicularly to the direction of sliding of the locking bolt,
- the cam (23) has a profile shaped so as to define two stable positions of the locking bolt corresponding respectively to said locking position and to said unlocking position,
- the operating head (18) is provided with an index, notably a lateral finger (20) co-operating with at least one fixed indicator (27) on the front face of the apparatus.

2. The locking device according to claim 1, characterized in that the profile of the cam (23) comprises a portion of flat surface (25) defining said locking position.

3. The locking device according to claim 2, characterized in that the profile of the cam (23) comprises a portion of cylindrical surface (24) centred on said axis of rotation (26) and defining the unlocking position.

4. The locking device according to claim 3, characterized in that the portion of flat surface (25) is offset with respect to the axis of rotation (26) in the direction of the portion of cylindrical surface (24).

5. The locking device according to claim 3, characterized in that the rotating rod (16) has a cylindrical cross section between its operating head (18) and the cam (23) and that the portion of flat surface (25) of the cam is achieved by removal of matter in comparison to said cylindrical section.

6. The locking device according to claim 1, characterized in that said operating head (18) presents appreciably the shape of a screw head.

7. The locking device according to claim 1, characterized in that the lateral finger (20) is movable in a groove in the shape of an arc of a circle (21) the ends of which correspond to the two stable positions of the locking bolt (10).
